(19) **Europäisches Patentamt / European Patent Office / Office européen des brevets**

(11) **EP 4 542 185 A1**

(12) # EUROPEAN PATENT APPLICATION

(43) Date of publication:
23.04.2025 Bulletin 2025/17

(21) Application number: 24200992.6

(22) Date of filing: 18.09.2024

(51) International Patent Classification (IPC):
*G01J 1/04* (2006.01)   *G01S 7/481* (2006.01)

(52) Cooperative Patent Classification (CPC):
G01S 7/4813; G01S 7/4814; G01S 7/4817;
G01S 17/42; G01S 17/931

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 17.10.2023 KR 20230138142

(71) Applicant: **Hyundai Mobis Co., Ltd.**
**Gangnam-gu**
**Seoul 06141 (KR)**

(72) Inventors:
• **RA, Hyun Woon**
  **16875 Yongin-si (KR)**
• **JO, Sung Eun**
  **13481 Seongnam-si (KR)**

(74) Representative: **Vossius & Partner**
**Patentanwälte Rechtsanwälte mbB**
**Siebertstrasse 3**
**81675 München (DE)**

(54) **OPTICAL INTERFERENCE BLOCKING STRUCTURE**

(57)   Provided is a system applied to a bi-axial type optical system including an optical transmitter and a receiver. An optical interference blocking structure according to the present invention may more effectively achieve development of a LiDAR sensor by applying a design to prevent total reflection to a cover of the LiDAR sensor, thereby reducing noise that may degrade sensor performance, enhancing accuracy and precision of a sensor signal, and ultimately increasing a signal-to-noise ratio (SNR).

FIG. 2

EP 4 542 185 A1

**Description**

CROSS-REFERENCE TO RELATED APPLICATIONS

This application claims priority under 35 U.S.C. §119 to Korean Patent Application No. 10-2023-0138142, filed on October 17, 2023, in the Korean Intellectual Property Office.

TECHNICAL FIELD

The following disclosure relates to a system applied to a bi-axial type optical system including an optical transmitter and a receiver.

BACKGROUND

A light detection and ranging (LiDAR) sensor is a sensor that provides three-dimensional data, and generally measures a distance to an object by measuring a round-trip time of light using a laser. LiDAR sensors may be classified into a co-axial type in which optical axes of a transmitter and a receiver are aligned, and a bi-axial type in which the optical axes of the transmitter and the receiver are separated.

More specifically, a LiDAR sensor according to the related art includes a light source that repeatedly outputs laser pulses, a transmission lens that sends emitted laser pulses, a scanner for obtaining 3D data in a wide region, a reception lens that collects signals reflected by a target, a detector that detects the collected signals, and a signal processing unit that calculates a distance from the transmission lens and reception lens to the target based on the collected signals.

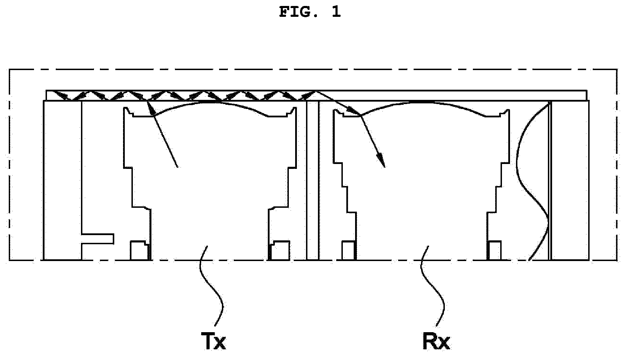

At this time, since a transmitter and a receiver of the bi-axial type LiDAR sensor according to the related art are not completely optically shielded, proximity noise may occur for the same reason, which may degrade performance. More specifically, a cover of the LiDAR according to the related art only has smooth flat or curved surfaces, which has the problem of not being able to prevent total reflection of light incident on the cover. In a case where light incident on the cover is totally reflected, light generated from the transmitter may move through the cover as a medium and be directly incident on the receiver without being reflected by the target as illustrated in FIG. 1, and thus, problems may arise in accuracy and precision when measuring a distance to the target.

[Related Art Document]

[Patent Document]

(Patent Document 1) Korean Patent Laid-Open Publication No. 10-2022-0004456 "LiDAR Device"

SUMMARY

An embodiment of the present invention is directed to providing an optical interference blocking structure that may more effectively achieve development of a LiDAR sensor by applying a design to prevent total reflection to a cover of the LiDAR sensor, thereby reducing noise that may degrade sensor performance, enhancing accuracy and precision of a sensor signal, and ultimately increasing a signal-to-noise ratio (SNR).

In one general aspect, an optical interference blocking structure for a light detection and ranging (LiDAR) system including a transmitter that transmits light in one direction and a receiver that receives light in the one direction includes: a cover portion which is a window provided in the one direction of the LiDAR system; and a total reflection prevention portion protruding from the cover portion toward the LiDAR system, wherein the total reflection prevention portion includes a protrusion and a groove having a uniform shape and formed to prevent internal total reflection of incident light.

The cover portion may have a flat surface, and the total reflection prevention portion may be formed along an edge of the cover portion and have at least one first inclined surface forming a predetermined inclination angle with one surface of the cover portion.

The first inclined surface of the total reflection prevention portion may satisfy the following expression:

$$\theta_d > \theta_i - \theta_c$$

where

$$\theta_{d1}$$

surface and the one surface of the cover portion, $\theta_i$ is an incident angle of the light, and $\theta_c$ is a critical angle of a material of the cover portion.

The cover portion may have a curved surface, and the total reflection prevention portion may be formed along an edge of the cover portion and have at least one second inclined surface forming a predetermined inclination angle with the one surface of the cover portion.

The second inclined surface of the total reflection prevention portion may satisfy the following expression:

$$\theta_{d2} > \theta_i - \theta_c + (\theta_{r1} + \theta_{r2})$$

where

$$\theta_{d2}$$

is the inclination angle formed by the second inclined surface and the one surface of the cover portion, $\theta_i$ is an incident angle of the light, $\theta_c$ is a critical angle of a material of the cover portion, $\theta_{r1}$ is a tangential angle at a light incident point on an inner curved surface of the cover portion, and $\theta_{r2}$ is a tangential angle at a light emission point on an outer curved surface of the cover portion.

The total reflection prevention portion may have at least one third inclined surface whose slope connecting both ends forms a predetermined inclination angle with the one surface of the cover portion, and the third inclined surface may be formed as a curved surface having a predetermined curvature.

The third inclined surface may include a convex inclined surface that is convex with respect to the cover portion, and a concave inclined surface that connects the convex inclined surfaces and is concave with respect to the cover portion.

The optical interference blocking structure may further include a shielding wall installed between the transmitter and the receiver, in which the shielding wall may contain a material that does not transmit light.

The total reflection prevention portion may be formed in a region facing the shielding wall.

The total reflection prevention portion may be formed along an edge of the cover portion and may be formed only at an edge of a region where the transmitter is positioned among regions divided by the shielding wall.

BRIEF DESCRIPTION OF THE DRAWINGS

FIG. 1 is a schematic diagram illustrating a noise generation process in a light detection and ranging (LiDAR) system according to the related art.

FIG. 2 is a cross-sectional view illustrating an optical interference blocking structure according to the present invention.

FIG. 3 is a top view illustrating the optical interference blocking structure according to the present invention.

FIGS. 4 and 5 are schematic diagrams illustrating a coupling relationship between a cover portion and a total reflection prevention portion according to the present invention.

FIG. 6 is a partial perspective view illustrating an example of the total reflection prevention portion according to the present invention.

FIG. 7 is a top view illustrating a shielding wall of the optical interference blocking structure according to the present invention.

FIG. 8 is a cross-sectional view illustrating the shielding wall of the optical interference blocking structure according to the present invention.

FIG. 9 is a top view illustrating a first example of the optical interference blocking structure according to the present invention.

FIG. 10 is a cross-sectional view illustrating the first example of the optical interference blocking structure according to the present invention.

FIG. 11 is a top view illustrating a second example of the optical interference blocking structure according to the present invention.

[Detailed Description of Main Elements]

1000: Optical interference blocking structure
100: Cover portion
200: Total reflection prevention portion
210: First inclined surface
220: Second inclined surface
230: Third inclined surface
231: Concave inclined surface
232: Convex inclined surface
300: Shielding wall
Tx: Transmitter
Rx: Receiver

DETAILED DESCRIPTION OF EMBODIMENTS

Hereinafter, the technical spirit of the present invention will be described in more detail with reference to the accompanying drawings. Terms and words used in the present specification and claims are not to be construed as general or dictionary meanings, but are to be construed as meanings and concepts meeting the technical ideas of the present invention based on a principle that the present inventors may appropriately define the concepts of terms in order to describe their inventions in the best mode.

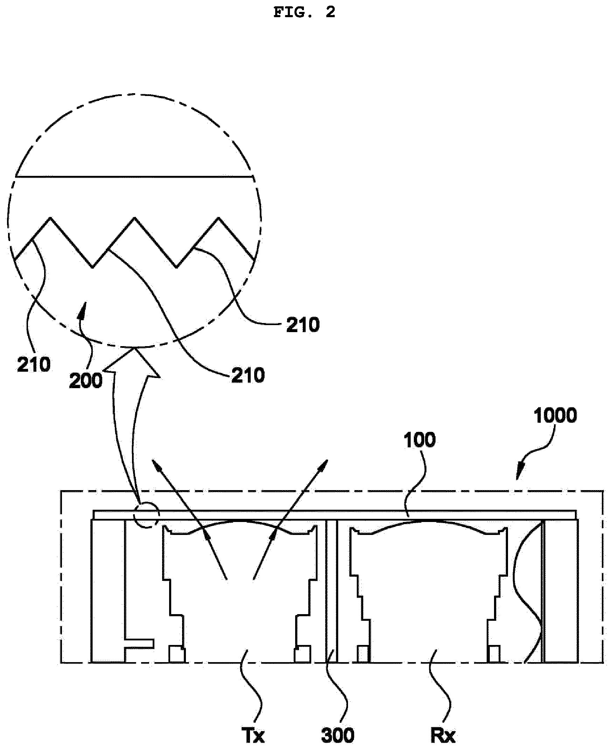

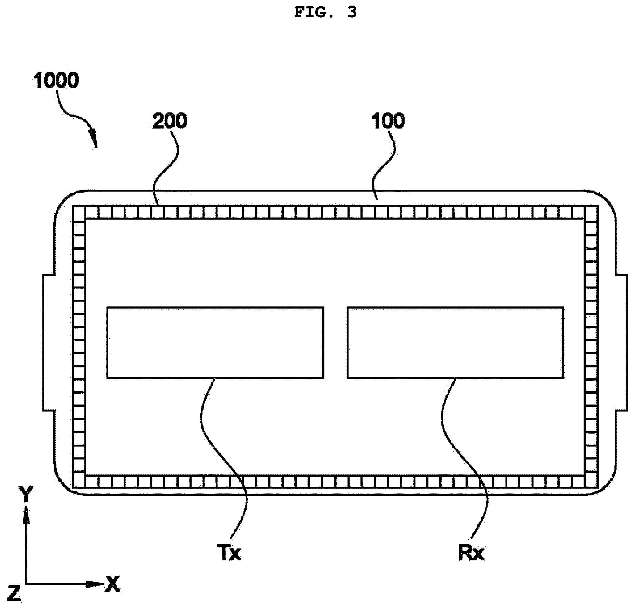

Hereinafter, a basic configuration of an optical interference blocking structure 1000 according to the present invention will be described in more detail with reference to FIGS. 2 and 3.

As illustrated in FIG. 2, the optical interference blocking structure 1000 according to the present invention is applied to a light detection and ranging (LiDAR) system including a transmitter Tx that transmits light in one direction and a receiver Rx that receives light in one direction, and the optical interference blocking structure 1000 according to the present invention may include a cover portion 100 which is a window provided in one direction of the LiDAR system. That is, the cover portion 100 may cover both a side where the transmitter Tx generates light and a side where the receiver Rx receives light. At this time, the cover portion 100 may be formed of a material that may transmit light, such as glass or silicon. The cover portion 100 may protect the transmitter Tx and the receiver Rx of the LiDAR system from an external force.

At this time, the optical interference blocking structure 1000 according to the present invention may further include a total reflection prevention portion 200 that protrudes from the cover portion 100 toward the LiDAR system. The total reflection prevention portion 200 may be formed integrally with the cover portion 100, may protrude from the cover portion 100 toward the LiDAR system, and may have a specific shape with predetermined protrusions and grooves formed at a protruding end portion. At this time, light generated from the transmitter Tx and incident on the cover portion 100 may not be totally reflected within the cover portion 100 but be refracted and move to the outside of the cover portion 100 due to the shape of the total reflection prevention portion 200. Accordingly, light transmitted from the transmitter Tx may not be directly transmitted to the receiver Rx, but may be transmitted to the receiver Rx after being reflected by a target. The optical interference blocking structure 1000 according to the present invention may include the total reflection prevention portion 200 to reduce noise that may degrade performance of the LiDAR system and enhance accuracy and precision of a sensor signal.

In addition, as illustrated in FIG. 3, the total reflection prevention portion 200 may be formed along an edge of the cover portion 100. The transmitter Tx and the receiver Rx may generate and receive light in a Z-axis direction in FIG. 3, and the light generated by the transmitter Tx may radially move based on a light generation point inside the transmitter Tx. The light moving radially may be reflected by a housing of the LiDAR system or the like and incident on the cover portion 100, and the light incident on the cover portion 100 may be totally reflected and move inside the cover portion 100 according to an incident angle of the light and be directly incident on the receiver Rx. In this regard, the total reflection prevention portion 200 may be formed at the edge of the cover portion 100, so that light incident on the cover portion 100 may be refracted by the total reflection prevention portion 200 positioned at the edge without being totally reflected and move to the outside of the cover portion 100 when being directed toward the receiver Rx even though the light incident on the cover portion 100 is totally reflected by a portion where the total reflection prevention portion 200 is not formed.

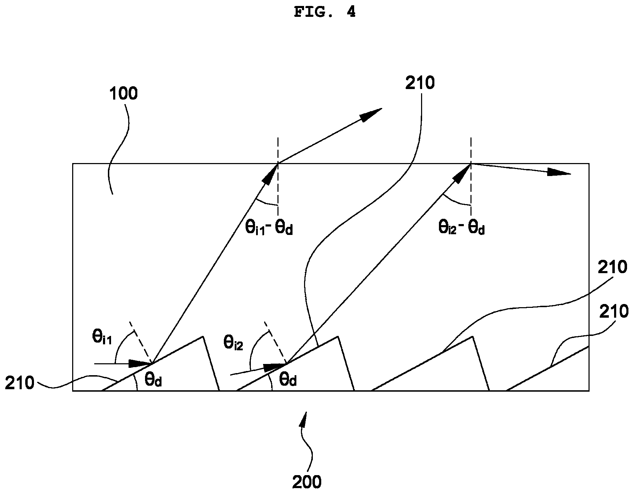

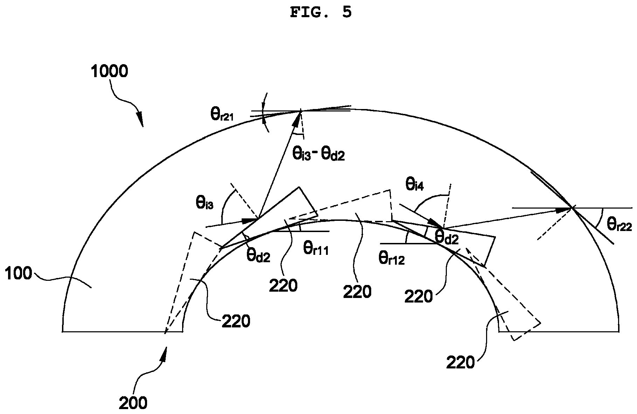

Hereinafter, a shape limitation of the total reflection prevention portion 200 according to the present invention will be described in more detail with reference to FIGS. 4 and 5.

As illustrated in FIG. 4, the cover portion 100 may have a flat surface, and the total reflection prevention portion 200 may have at least one first inclined surface 210 forming a predetermined inclination angle with one surface of the cover portion 100. That is, the total reflection prevention portion 200 may have a saw-toothed shape with triangular prism-shaped grooves or protrusions, and a surface of the total reflection prevention portion 200 that corresponds to the first inclined surface 210 may have the largest area. More specifically, the inclination angle of the first inclined surface 210 of the total reflection prevention portion 200 may satisfy the following Expression 1.

$$\text{Expression 1:} \quad \theta_{d1} > \theta_i - \theta_c$$

( $\theta_{d1}$: the inclination angle formed by the first inclined surface 210 and one surface of the cover portion 100, $\theta_i$: the incident angle of the light, and $\theta_c$ : a critical angle of the material of the cover portion 100)

Here, $\theta_c$ may be a constant value determined by the material of the cover portion 100. For example, in a case where the cover portion 100 is formed of polycarbonate, $\theta_c$ may be 39.68 degrees ($\approx$ 40 degrees). In addition, a range of $\theta_i$ may be predetermined depending on specifications and structures of the cover portion 100 and the LiDAR system. For example, assuming that the inclination angle

$$\theta_{d1}$$

of the first inclined surface 210 is determined to be 20 degrees and $\theta_c$ is 40 degrees, when the value of the incident angle $\theta_{i1}$ is 50 degrees, the right side of the expression is 10 degrees, which satisfies Expression 1 above, and thus, the light may be refracted without total reflection and move to the outside of the cover portion 100. On the other hand, when the value of the incident angle

$$\theta_{i2}$$

is 60 degrees, the right side of the expression is 20 degrees, which does not satisfy Expression 1 above, and thus, the light may be totally reflected and act as noise. In other words,

$$\theta_{d1}$$

may be determined after determining in advance a range of the incident angle of the light incident on the cover portion 100 when operating the LiDAR system.

As illustrated in FIG. 5, the cover portion 100 may have a curved surface, and the total reflection prevention portion 200 may have at least one second inclined surface 220 forming a predetermined inclination angle with one surface of the cover portion 100. That is, the total reflection prevention portion 200 may have a saw-toothed shape with triangular prism-shaped grooves or protrusions, and a surface of the total reflection prevention portion 200 that corresponds to the second inclined surface 220 may have the largest area. More specifically, the inclination angle of the second inclined surface 220 of the total reflection prevention portion 200 may satisfy the following Expression 2.

$$\text{Expression 2:} \quad \theta_{d2} > \theta_i - \theta_c + (\theta_{r1} + \theta_{r2})$$

( $\theta_{d2}$ : the inclination angle formed by the second inclined surface 220 and one surface of the cover portion 100, $\theta_i$: the incident angle of the light, $\theta_c$: the critical angle of the material of the cover portion 100, $\theta_{r1}$: a tangential angle at a light incident point on an inner curved surface of the cover portion 100, and $\theta_{r2}$: a tangential angle at a light emission point on an outer curved surface of the cover portion 100)

Here, $\theta_c$ may be a constant value determined by the material of the cover portion 100. For example, in a case where the cover portion 100 is formed of polycarbonate, $\theta_c$ may be 39.68 degrees ($\approx$ 40 degrees). In addition, a correlation between $\theta_i$, $\theta_{r1}$, and $\theta_{r2}$ and ranges of $\theta_i$, $\theta_{r1}$, and $\theta_{r2}$ may be predetermined depending on the specifications and structures of the cover portion 100 and the LiDAR system. For example, assuming that the inclination angle $\theta_{d2}$ of the second inclined surface 220 is determined to be 20 degrees and $\theta_c$ is 40 degrees, when the tangential angle $\theta_{r11}$ at the light incident point is 20 degrees, and the value of the incident angle $\theta_{i3}$ is 60 degrees, the tangential angle $\theta_{r21}$ at the light emission point is determined to be 7 degrees, and the right side of the expression is 27 degrees, which satisfies Expression 2 above, and thus, the light may be refracted without total reflection and move to the outside of the cover portion 100. In addition, when the tangential angle $\theta_{r12}$ at the light incident point is 30 degrees, and the value of the incident angle $\theta_{i4}$ is 70 degrees, $\theta_{r22}$ is determined to be 45 degrees and the right side of the expression is 35 degrees, which also satisfies Expression 2 above, and thus, the light may be refracted without total reflection and move to the outside of the cover portion 100. In other words,

$$\theta_d$$

may be determined after determining in advance the range of the incident angle of the light incident on the cover portion 100 and the shape of the curved surface of the cover portion 100 when operating the LiDAR system.

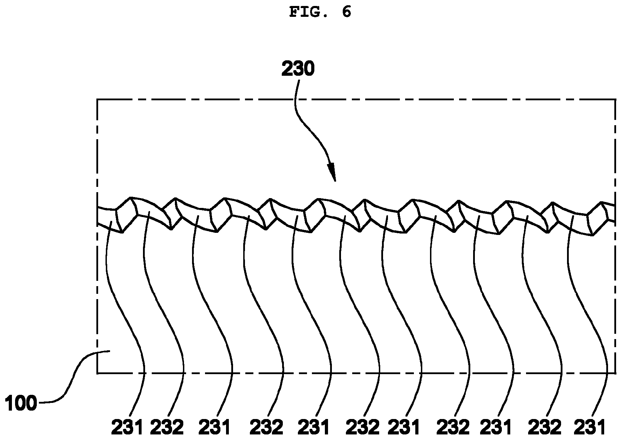

Hereinafter, an example of the shape of the total reflection prevention portion 200 according to the present invention will be described in more detail with reference to FIG. 6.

In an example, the total reflection prevention portion 200 may have at least one third inclined surface 230 whose slope connecting both ends forms a predetermined inclination angle with one surface of the cover portion 100 as illustrated in FIG. 6. At this time, the total reflection prevention portion 200 may be formed in a saw-toothed shape, and the third inclined surface 230 may be an inclined surface having the largest area. At this time, the inclination angle of the third inclined surface 230 may follow the inclination angle $\theta_{d1}$ of the first inclined surface 210 or the inclination angle $\theta_{d2}$ of the second inclined surface 220 depending on the shape of the cover portion 100.

In addition, the third inclined surface 230 may be formed as a curved surface having a predetermined curvature. More specifically, the third inclined surface 230 may include a convex inclined surface 232 that is convex with respect to the cover portion 100, and a concave inclined surface 231 connecting the convex inclined surfaces 232 and having a smaller area than the convex inclined surface 232.

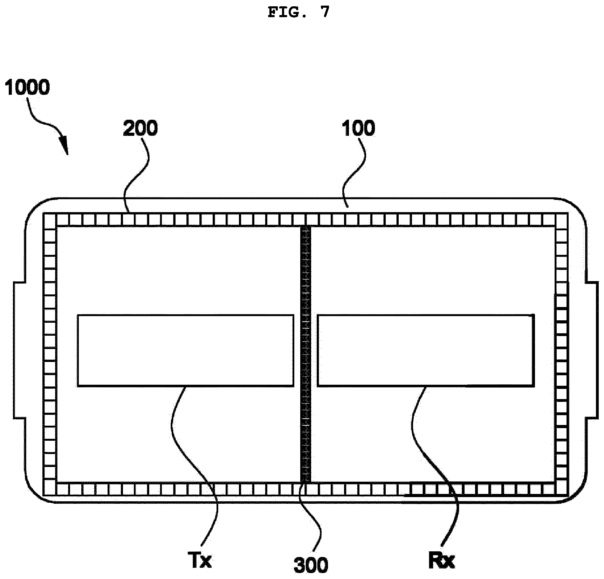

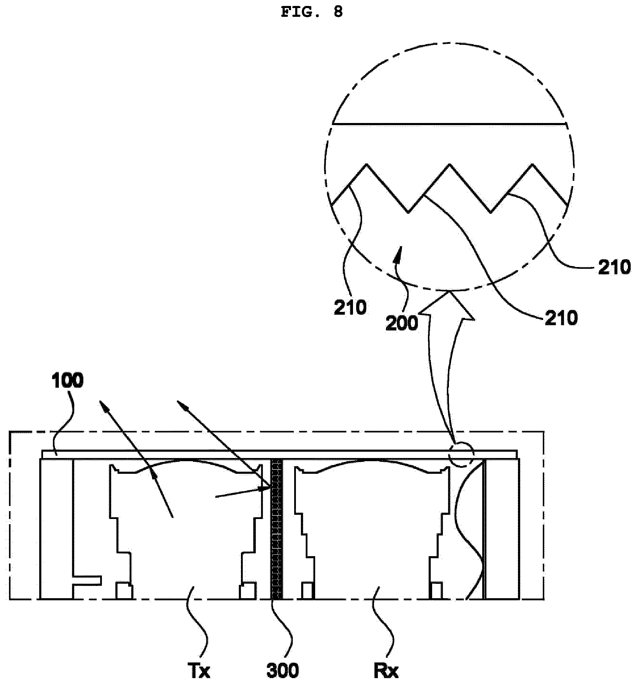

Hereinafter, a shielding wall 300 of the optical interference blocking structure 1000 according to the present invention will be described in more detail with reference to FIGS. 7 and 8.

As illustrated in FIG. 7, the optical interference blocking structure 1000 according to the present invention may further include the shielding wall 300 which is a wall installed between the transmitter Tx and the receiver Rx. Here, the shielding wall 300 may contain a material that does not transmit light and may be formed of a metal material. The optical interference blocking structure 1000 according to the present invention may include the shielding wall 300 to block transmission of light, thereby preventing light transmitted from the transmitter Tx from being transmitted to the receiver Rx. Accordingly, as illustrated in FIG. 8, proximity noise detected when a laser pulse emitted from the transmitter Tx is reflected from lens surfaces of the transmitter Tx and the receiver Rx, or internal scattering in the housing or the like included in the LiDAR system may be removed.

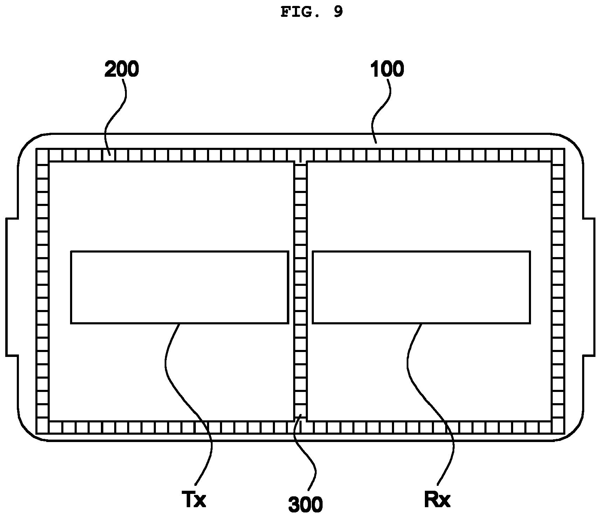

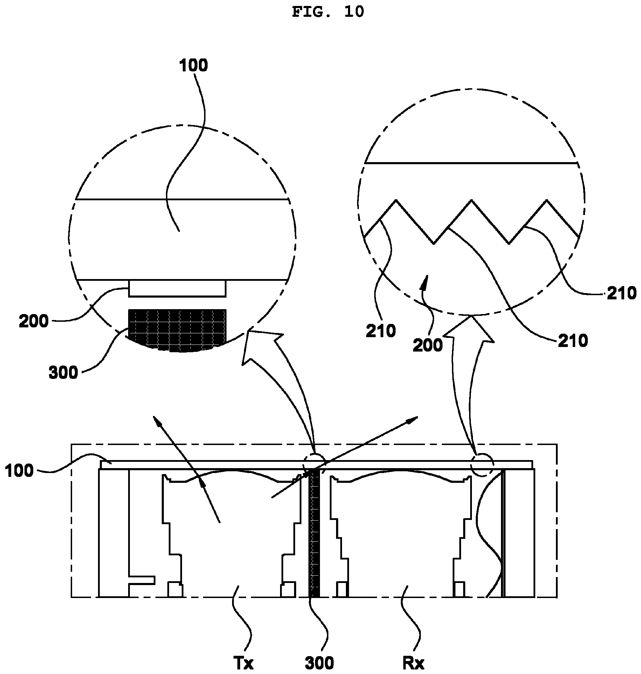

Hereinafter, a first example of the optical interference blocking structure 1000 according to the present invention will be described in more detail with reference to FIGS. 9 and 10.

As illustrated in FIG. 9, in the first example of the optical interference blocking structure 1000 according to the present invention, the optical interference blocking structure 1000 according to the present invention may include the shielding wall 300 installed between the transmitter Tx and the receiver Rx, the shielding wall 300 and the cover portion 100 may be disposed while being spaced apart from each other at a predetermined interval, and the total reflection prevention portion 200 may also be formed in a region of the cover portion 100 that faces the shielding wall 300 in addition to an edge region of the cover portion 100. Accordingly, even when noise is totally reflected along a surface of the cover portion 100 on which the total reflection prevention portion is not formed and reaches the vicinity of the shielding wall 300, total reflection of the noise may be secondarily prevented by the total reflection prevention portion 200 formed in the region corresponding to the shielding wall 300, and ultimately, light that may generate noise may be directed toward the outside of the cover portion 100, that is, toward the target as illustrated in FIG. 10.

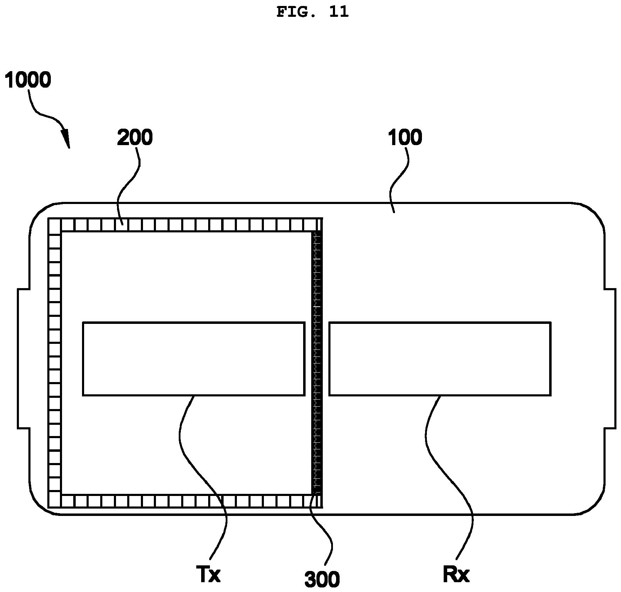

Hereinafter, a second example of the optical interference blocking structure 1000 according to the present invention will be described in more detail with reference to FIG. 11.

As illustrated in FIG. 11, the total reflection prevention portion 200 may be formed along the edge of the cover portion 100 and may be formed only at an edge of a region where the transmitter Tx is positioned among regions divided by the shielding wall 300. In fact, the total reflection prevention portion 200 according to the present invention aims to prevent light generated from the transmitter Tx from reaching the receiver Rx. Therefore, high noise removal performance may be expected only by blocking noise occurring near the transmitter Tx. That is, an effect of maintaining the noise removal performance and increasing manufacturing efficiency may be expected by applying the second example of the optical interference blocking structure 1000 according to the present invention.

The optical interference blocking structure according to the present invention with the configuration as described above may more effectively achieve development of a LiDAR sensor by applying a design to prevent total reflection to a cover of the LiDAR sensor, thereby reducing noise that may degrade sensor performance, enhancing accuracy and precision of a sensor signal, and ultimately increasing a signal-to-noise ratio (SNR).

Therefore, the spirit of the present invention should not be limited to the described embodiments, but the claims and all of modifications equal or equivalent to the claims are intended to fall within the scope and spirit of the present invention.

**Claims**

1. An optical interference blocking structure for a light detection and ranging (LiDAR) system including a transmitter that transmits light in one direction and a receiver that receives light in the one direction, the optical interference blocking structure comprising: a

   a cover portion which is a window provided in the one direction of the LiDAR system; and
   a total reflection prevention portion protruding from the cover portion toward the LiDAR system,
   wherein the total reflection prevention portion includes a protrusion and a groove having a uniform shape and formed to prevent internal total reflection of incident light.

2. The optical interference blocking structure of claim 1,

   wherein the cover portion has a flat surface, and
   wherein the total reflection prevention portion is formed along an edge of the cover portion and include at least one first inclined surface forming a predetermined inclination angle with one surface of the cover portion.

3. The optical interference blocking structure of claim 2,
   wherein the at least one first inclined surface of the cover portion and the flat surface of the cover portion form a shape of triangular prism.

4. The optical interference blocking structure of claim 2, wherein the first inclined surface of the total reflection prevention portion satisfies the following expression:

$$\theta_{d1} > \theta_i - \theta_c$$

   where $\theta_{d1}$ is the inclination angle formed by the first inclined surface and the one surface of the cover portion, $\theta_i$ is an incident angle of the light, and $\theta_c$ is a critical angle of a material of the cover portion.

5. The optical interference blocking structure of claim 1,

   wherein the cover portion has a curved surface, and
   wherein the total reflection prevention portion is formed along an edge of the cover portion and includes at least one second inclined surface forming a predetermined inclination angle with the one surface of the cover portion.

6. The optical interference blocking structure of claim 5,
   wherein the at least one second inclined surface of the cover portion and the one surface of the cover portion form a shape of triangular prism.

7. The optical interference blocking structure of claim 5, wherein the second inclined surface of the total reflection prevention portion satisfies the following expression:

$$\theta_{d2} > \theta_i - \theta_c + (\theta_{r1} + \theta_{r2})$$

   where $\theta_{d2}$ is the inclination angle formed by the second inclined surface and the one surface of the cover portion, $\theta_i$ is an incident angle of the light, $\theta_c$ is a critical angle of a material of the cover portion, $\theta_{r1}$ is a tangential angle at a light incident point on an inner curved surface of the cover portion, and $\theta_{r2}$ is a tangential angle at a light emission point on an outer curved surface of the cover portion.

8. The optical interference blocking structure of claim 1,

   wherein the total reflection prevention portion includes at least one third inclined surface whose slope connecting first and second ends forms a predetermined inclination angle with the one surface of the cover portion, and
   wherein the third inclined surface is formed as a curved surface having a predetermined curvature.

9. The optical interference blocking structure of claim 8,

wherein the at least one third inclined surface of the cover portion and the one surface of the cover portion form a shape of triangular prism.

10. The optical interference blocking structure of claim 8, wherein the third inclined surface includes:

a convex inclined surface that is convex with respect to the cover portion; and
a concave inclined surface that connects the convex inclined surfaces and is concave with respect to the cover portion.

11. The optical interference blocking structure of claim 1, further comprising:

a shielding wall installed between the transmitter and the receiver,
wherein the shielding wall contains a material that does not transmit the light.

12. The optical interference blocking structure of claim 11, wherein the total reflection prevention portion is formed in a region of the cover portion facing the shielding wall.

13. The optical interference blocking structure of claim 11, wherein the total reflection prevention portion is formed along an edge of the cover portion

14. The optical interference blocking structure of claim 13, wherein the total reflection prevention portion is formed in a region of the cover portion facing the shielding wall.

15. The optical interference blocking structure of claim 13, wherein the cover portion cover a side of the optical interference blocking structure where the transmitter Tx generates the light and a side of the optical interference blocking structure where the receiver Rx receives light.

16. The optical interference blocking structure of claim 13, wherein the total reflection prevention portion is formed only at an edge of a region of the cover portion where the transmitter is positioned among regions of the cover portion divided by the shielding wall.

FIG. 1

Tx          Rx

FIG. 2

FIG. 3

FIG. 4

FIG. 5

FIG. 6

230

100

231 232 231 232 231 232 231 232 231 232 231

FIG. 7

## FIG. 8

FIG. 9

## FIG. 10

FIG. 11

Europäisches
Patentamt
European
Patent Office
Office européen
des brevets

# EUROPEAN SEARCH REPORT

Application Number

EP 24 20 0992

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/079384 A1 (LIAO SHUN-HSING [CN]) 16 March 2023 (2023-03-16) * abstract; figures 1-3 * * paragraphs [0014], [0027] * ----- | 1-16 | INV. G01J1/04 G01S7/481 |
| Y | US 2021/148761 A1 (OKUMURA KOJI [JP] ET AL) 20 May 2021 (2021-05-20) * abstract; figures 1-6, 9 * * paragraphs [0045] - [0046], [0094] - [0096] * ----- | 1-16 | |
| A | WO 2021/026809 A1 (SUTENG INNOVATION TECH CO LTD [CN]) 18 February 2021 (2021-02-18) * abstract; figures 1-6 * * paragraph [0057] * ----- | 1-16 | |

| TECHNICAL FIELDS SEARCHED (IPC) |
|---|
| G01J G01S |

The present search report has been drawn up for all claims

| Place of search | Date of completion of the search | Examiner |
|---|---|---|
| Munich | 5 February 2025 | Cordeiro, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 0992

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | Publication date | Patent family member(s) | | Publication date |
|---|---|---|---|---|
| US 2023079384 A1 | 16-03-2023 | CN | 115808692 A | 17-03-2023 |
| | | TW | 202311774 A | 16-03-2023 |
| | | US | 2023079384 A1 | 16-03-2023 |
| US 2021148761 A1 | 20-05-2021 | JP | 7380117 B2 | 15-11-2023 |
| | | JP | 2021081539 A | 27-05-2021 |
| | | US | 2021148761 A1 | 20-05-2021 |
| WO 2021026809 A1 | 18-02-2021 | CN | 112740074 A | 30-04-2021 |
| | | US | 2022171028 A1 | 02-06-2022 |
| | | WO | 2021026809 A1 | 18-02-2021 |

EPO FORM P0459

For more details about this annex : see Official Journal of the European Patent Office, No. 12/82

**REFERENCES CITED IN THE DESCRIPTION**

**Patent documents cited in the description**

- KR 1020230138142
- KR 1020220004456